# FASCICULE DE BREVET EUROPEEN

(11) **EP 4 416 943 B1**
(45) Date de publication et mention de la délivrance du brevet: **14.05.2025**
(21) Numéro de dépôt: 22800663.1
(22) Date de dépôt: 11.10.2022
(51) Int. Cl.: H04W 4/029, H04W 4/80, H04W 4/35, G06Q 10/0833, G01S 5/02, G01S 19/34, H04W 52/02, G01S 19/48, G06Q 10/08, G06Q 30/0601, G06Q 10/087, H04W 88/06, G01S 5/00

(54) **SYSTEME DE GEOLOCALISATION D'AU MOINS DEUX OBJETS**
SYSTEM ZUR GEOLOKALISIERUNG VON MINDESTENS ZWEI OBJEKTEN
SYSTEM FOR GEOLOCATING AT LEAST TWO OBJECTS

(30) Priorité: 14.10.2021 FR 2110873
(43) Date de publication de la demande: 21.08.2024
(73) Titulaire: PA.COTTE SA, 1009 Pully (CH)
(72) Inventeur: RENAUD, Dorine, 44980 Sainte Luce sur Loire (FR); POREZ, Mathieu, 44980 Sainte Luce sur Loire (FR)
(74) Mandataire: reuteler & cie SA
(86) Numéro de dépôt international: PCT/EP2022/078165
(87) Numéro de publication internationale: WO 2023/061966

(56) Documents cités:
- WO-A1-2017/184616
- GB-A- 2 503 058
- US-B1- 6 975 941

## Description

Le domaine de l'invention est celui de la logistique.

Plus précisément, l'invention concerne l'acheminement d'objets, et plus précisément, l'acheminement d'objets intelligents et connectés.

Dans le domaine de l'invention, les prestataires d'achat et de vente en ligne de produits sont désormais courants et nombreux, utilisant des systèmes logistiques de livraison basés sur une approche de contrôle centralisé reposant notamment sur :
- le regroupement des marchandises à acheminer ;
- le transport en masse ;
- l'envoi par colis.

De plus en plus, dans de tels systèmes logistiques, il est classique de connaître en temps réel la position de l'objet à acheminer, pour le situer vis-à-vis de son point d'arrivée et/ou vis-à-vis des individus dans l'attente de la livraison de l'objet. Dans ce contexte, pour suivre les déplacements des objets à acheminer, ceux-ci sont équipés de moyens de géolocalisation et de moyens de communication leur permettant d'émettre des données relatives à leur localisation. On obtient de cette façon un système de traçabilité du cheminement des objets.

En d'autres termes, l'électronique embarquée dans les objets, et en particulier dans les colis contenant des objets à acheminer, procure des capacités de télémétrie et de suivi dans le temps et dans l'espace (ce suivi étant couramment désigné par le terme anglais « tracking »). Ainsi, comme l'illustre le document GB2503058 de tels conteneurs sont capables de mesurer des grandeurs physiques, de les enregistrer et de les transmettre à un système d'information distant prenant la forme d'une plateforme informatique.

Concernant la fonction de « tracking », le colis contient un dispositif de géolocalisation dont les données peuvent être, comme celles issues de la télémétrie, enregistrées puis transmises à la plateforme informatique.

Ces données de géolocalisation comprennent au moins les mes données suivantes :
- l'heure et la date ;
- la longitude, la latitude et l'altitude ;
- la vitesse ;
- la précision (en mètre, précisions de position horizontale et verticale procurées par le système de géolocalisation).

Selon l'offre de service des prestataires, la fréquence d'activation des différents dispositifs embarqués peut être plus ou moins soutenue et, le cas échéant, impacter plus ou moins fortement l'autonomie énergétique du colis. Cet impact se traduit en termes de réduction du nombre de livraisons possibles pour une charge de batterie.

Avec le document US6975941 on sait que la consommation du module de réception GPS (acronyme anglophone de « Global Position System » ou système de localisation par satellite) a un impact sur l'autonomie des dispositifs embarqués.

On comprend donc que la fonction de suivi des objets en cours de cheminement est basée sur une mesure périodique de géolocalisation par satellite. Ainsi, dans le cas de N colis dans un camion, selon la technique antérieure, chaque colis est amené, de manière asynchrone, à réaliser une mesure de géolocalisation dans un intervalle de temps donné. Pour une offre commerciale du prestataire consistant à réaliser deux points de localisation par heure, une flotte réalise en une heure 2 x N points de géolocalisation, dont certains sont réalisés simultanément tandis que d'autres n'aboutissent pas (par exemple pour un défaut de communication avec un satellite).

En d'autres termes, une activation fréquente du dispositif de géolocalisation engendre un problème technique s'agissant de l'alimentation électrique et des moyens de géolocalisation et de communication. Il faut en effet prévoir, pour maintenir un nombre d'utilisations conséquent du colis, de recourir à un système de rechargement en électricité des moyens d'alimentation dédiés à la géolocalisation du colis, ce qui peut impliquer des contraintes difficilement gérables.

La fonction rechargement électrique de la batterie est une solution possible. Il peut être également envisagé d'embarquer dans le colis une capacité électrique non rechargeable mais suffisante pour atteindre le nombre désiré (contrainte du cahier des charges) de livraison par l'exploitant à la conception du dispositif de géolocalisation. Cependant, poursuivre une telle stratégie engendrerait la prise en charge d'un poids dit « mort » de batterie au transport.

Par ailleurs, on connaît du document WO2017184616 la transmission d'information de localisation entre appareils personnels du type téléphone mobile, tablette, ordinateur, dans des zones à forte densité de population.

L'invention a notamment pour objectif de pallier cet inconvénient de l'art antérieur.

Plus précisément, l'invention a pour objectif de proposer un système de géolocalisation d'objets à acheminer qui n'implique pas de contraintes, ou à tout le moins qui limite celles-ci, s'agissant de la gestion du niveau de rechargement électrique des moyens techniques couplés aux objets à acheminer et impliqués dans la traçabilité spatio-temporelle des objets. L'invention a également pour objectif de fournir un tel système de géolocalisation d'objets qui soit pratique et simple d'utilisation pour les prestataires impliqués dans l'acheminement des objets.

Ces objectifs, ainsi que d'autres qui apparaîtront par la suite, sont atteints grâce à l'invention qui a pour objet un système de géolocalisation comprenant :
- au moins deux objets à géolocaliser, chaque objet intégrant :
   - un code de reconnaissance ;
   - des premiers moyens de communication de proximité sans fil, aptes à communiquer avec des premiers moyens de communication de proximité sans fil d'un autre objet ;
   - des deuxièmes moyens de communication longue distance ;
   - un dispositif de géolocalisation ;
   - une unité de traitement configurée pour émettre un signal d'activation du dispositif de géolocalisation à intervalles de temps réguliers et apte à recevoir et mémoriser des données de géolocalisation fournies par le dispositif de géolocalisation, et configurée pour leur attribuer un statut de validité positif pendant une durée prédéterminée, et un statut de validité négatif au-delà de la durée prédéterminée
   - une plateforme informatique incluant au moins une base de données relative aux objets listant les codes de reconnaissance de tous les objets et incluant des troisièmes moyens de communication longue distance aptes à communiquer avec les deuxièmes moyens de communication longue distance des objets,
   le système étant tel que l'unité de traitement d'un objet est configurée pour, préalablement à une émission du signal d'activation :
   - ouvrir un canal de communication avec un autre objet par l'intermédiaire des moyens de communication de proximité sans fil
   - lire le statut de validité de l'autre objet, et,
   - si le statut de validité de l'autre objet est positif, recevoir des données de géolocalisation mémorisées dans l'unité de traitement de l'autre objet et maintenir en un état inactif le dispositif de géolocalisation,
   - émettre, à destination de la plateforme informatique, les données de géolocalisation fournies par l'unité de traitement de l'autre objet.

Ainsi, grâce à l'invention, on obtient un système de géolocalisation d'objets acheminés par lots (c'est-à-dire regroupés dans un moyen de transport par exemple, mais également éventuellement regroupés dans un conteneur ou encore dans un hub logistique) ou, autrement dit, en flotte, dans lequel un partage des données de géolocalisation est organisé.

En effet, les moyens techniques liés aux moyens de géolocalisation sont très consommateurs d'énergie électrique. Dans un système selon l'invention, ceux-ci ne sont activés (et donc consomment de l'énergie) uniquement s'il n'est pas possible d'obtenir et d'exploiter des données de géolocalisation d'un autre objet placé directement à proximité, ou à tout le moins placé de telle sorte que les moyens de communication de proximité sans fil permettent à deux objets physiquement voisins de communiquer entre eux.

Si un objet peut recevoir les données de géolocalisation d'un autre objet, alors les moyens techniques liés à la géolocalisation ne sont pas activés et seuls les moyens impliquant une faible consommation électrique sont en fonctionnement, tel que précisément les moyens de communication de proximité sans fil.

Il en résulte qu'il est possible d'alimenter électriquement les moyens techniques couplés à l'objet acheminé par une batterie simple, susceptible d'assurer de façon autonome une alimentation électrique sur une longue durée. Les dispositifs embarqués peuvent ainsi parcourir de longues distances en toute autonomie électrique. De plus, ils peuvent être réutilisés à de nombreuses reprises, sans devoir les recharger électriquement, en étant couplés à différents objets successifs à acheminer.

Bien entendu, la possible réutilisation à plusieurs reprises des dispositifs embarqués confère au système de traçabilité un intérêt économique évident, ainsi qu'un bilan carbone optimisé en évitant l'obsolescence rapide des dispositifs embarqués, en tout ou partie. Il est à noter que l'alimentation électrique peut être intégrée à l'objet ou au colis intégrant l'objet, comme cela ressort du contexte décrit précédemment. Toutefois, il est également envisageable, sans sortir du cadre de l'invention, de prévoir une alimentation électrique externe, possiblement par une technique de transmission d'énergie sans fil.

On note également que, selon une caractéristique importante de l'invention, une donnée de géolocalisation mémorisée dans un objet, et susceptible d'être transmise à un autre objet de la flotte, a une durée de validité limitée et prédéterminée. En effet, dans la mesure où les objets du système sont par nature destinés à être en cours d'acheminement, il est nécessaire de s'assurer que les données de géolocalisation sont régulièrement actualisées.

Il est encore à noter que les données de géolocalisation peuvent être fournies par satellite, mais aussi par tout autre moyen approprié et notamment par une système de géolocalisation cellulaire ou GSM, de géolocalisation par interfaces de communication longues, moyennes et courtes distances comme le LoRa, le WiFi, l'UHF, etc ... Ces moyens supplémentaires de localisation sont tous associés à des services Cloud spécifiques liant des identifiants de bases RF connues et référencées avec des positions géographiques.

Selon une solution avantageuse, l'unité de traitement d'un objet est configurée pour recevoir, avec les données de géolocalisation mémorisées dans l'unité de traitement de l'autre objet, le statut de validité positif de l'autre objet.

De cette façon, un objet recevant les données de géolocalisation d'un autre objet peut, à son tour, indiquer à un troisième objet, qu'il détient des données de géolocalisation avec un statut de validité positif.

Dans ce cas, une unité de traitement d'un objet est avantageusement configurée pour recevoir, avec le statut de validité positif de l'autre objet, une durée restante de validité.

On comprend donc que, selon cette caractéristique, une fois le statut de validité positif expiré, le statut de validité est déclaré négatif. Un autre objet qui communique avec l'objet dont le statut de validité des données de géolocalisation est négatif, ne reçoit alors pas les données de cet objet et va éventuellement continuer à rechercher d'autres objets de la flotte dont le statut des données de géolocalisation est positif.

Préférentiellement, l'unité de traitement d'un objet est configurée pour programmer dans le temps, à la fin de la durée restante de validité, un signal d'activation du dispositif de géolocalisation.

De cette façon, en plus de prévoir le changement du statut de validité des données de géolocalisation, l'unité de traitement de l'objet est paramétrée pour reprogrammer, selon l'intervalle de temps prévu initialement, le moment de la prochaine acquisition de données de géolocalisation, et donc de l'activation du dispositif de géolocalisation.

Selon une solution avantageuse, la durée restante de validité d'un statut de validité est au moins deux fois inférieure à celle d'un intervalle de temps séparant deux signaux d'activation.

Préférentiellement, dans un système de géolocalisation comprenant un nombre N d'objets, la durée restante de validité d'un statut de validité est N fois inférieure à celle d'un intervalle de temps séparant deux signaux d'activation.

Avec une telle organisation du système, on optimise de façon très importante la réduction de consommation énergétique de l'ensemble des objets de la flotte, en favorisant au maximum les échanges entre les objets par les moyens de communication de proximité sans fil, faibles consommateurs d'énergie, par rapport à l'activation et à l'utilisation des dispositifs de géolocalisation.

Selon un mode de réalisation préférentiel, les objets intègrent des moyens d'alimentation électrique.

De tels moyens d'alimentation électrique peuvent être bien évidemment rechargeables.

Comme indiqué précédemment, il est possible alternativement de prévoir, sans sortir du cadre de l'invention, des moyens d'alimentation électrique externes.

Préférentiellement, l'unité de traitement d'un objet est configurée pour, consécutivement à une émission du signal d'activation, émettre, à destination de la plateforme informatique, les données de géolocalisation fournies par le dispositif de géolocalisation et le code de reconnaissance informatique de l'objet.

Selon une solution préférée, l'unité de traitement d'un objet est configurée pour recevoir, avec les données de géolocalisation mémorisées dans l'unité de traitement de l'autre objet, le code de reconnaissance informatique de l'autre objet.

Ainsi, on évite la possibilité de fausser les données de géolocalisation qui consisterait à transmettre des données erronées à un objet pour qu'il les transmette à son tour à la plateforme. En effet, si les données de géolocalisation ne sont pas associées à un code de reconnaissance, la plateforme peut reconnaître si les données sont issues d'un objet qui ne fait pas partie de sa base de données et qui est donc considéré comme non fiable. Inversement, la réception d'un code de reconnaissance permet à la plateforme, configurée bien entendu en conséquence, de considérées comme fiables les données de géolocalisation associées audit code de reconnaissance.

Autrement dit, un tel système permet de prévenir toute fraude, comme l'usurpation de l'identité d'un dispositif de « tracking » par un tiers et la transmission à la plateforme d'une position erronée (mais valide du point de vue de l'invention) couvrant un vandalisme en cours.

Selon un autre mode de réalisation envisageable, le système selon l'invention utilise un jeu de clés publique et privée (mécanisme de sécurité connu de l'homme de métier). Dans ce cas, toutes les unités de traitement des objets recensés dans la base de données « objets » de la plateforme informatique sont paramétrées pour émettre, à destination de la plateforme informatique ou d'un autre objet, les données de géolocalisation de façon cryptée selon un protocole de cryptage fournie par la plateforme informatique. Une procédure classique de signature et de cryptage des données (ici de géolocalisation) est réalisée par tous les dispositifs de géolocalisation souhaitant mettre à disposition une information. Les données sont signées via une clé privée unique, distinctive de chaque dispositif et stocké dans une mémoire embarquée, sécurisé et inviolable. L'authentification du message de géolocalisation des dispositifs par la plateforme se fait par la clé publique enregistrée à la souscription (« abonnement » impliquant l'enregistrement d'un objet à géolocaliser dans la base de données de la plateforme).

Selon une mise en œuvre avantageuse du système de géolocalisation selon l'invention, les objets sont constitués par des colis intégrant chacun un dispositif embarqué comprenant :
- l'unité de traitement ;
- le code de reconnaissance ;
- les premiers moyens de communication ;
- les deuxièmes moyens de communication ;
- le dispositif de géolocalisation.

D'autres caractéristiques et avantages de l'invention apparaîtront plus clairement à la lecture de la description suivante d'un mode de réalisation préférentiel de l'invention, donné à titre de simple exemple illustratif et non limitatif, et du dessin annexé constitué par :

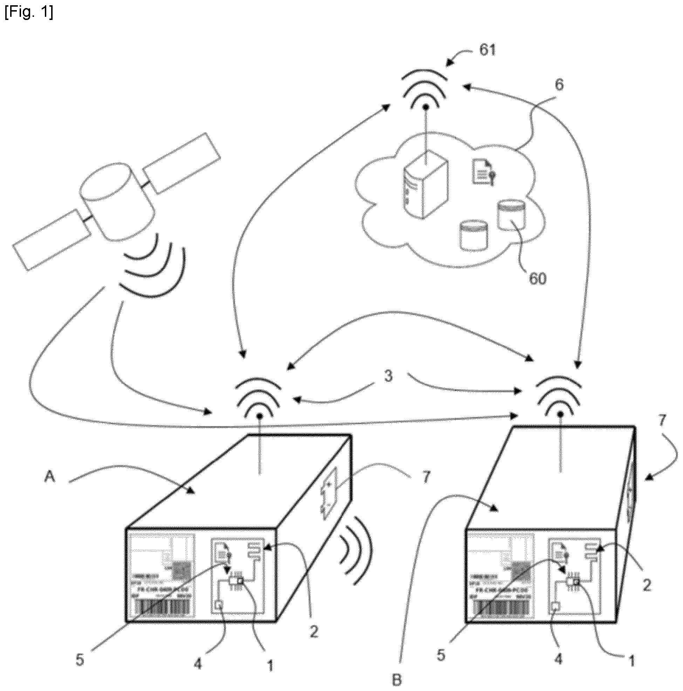

- la figure 1 qui illustre de façon schématique un système de géolocalisation d'une flotte d'objets à acheminer.

Tel qu'illustré par la figure 1, un système de géolocalisation selon l'invention comprend, de façon connue en soi :
- au moins deux objets A, B à géolocaliser (ou plus généralement une flotte de N objets à géolocaliser), incluant chacun une intelligence embarquée et des moyens de communication décrits par la suite, chaque objet portant notamment un code de reconnaissance informatique 1 ;
- une plateforme informatique 6, incluant au moins une base de données 60 listant les codes de reconnaissance informatique 1 de tous les objets.

En plus d'un code de reconnaissance informatique 1, chaque objet intègre :
- des premiers moyens de communication 2 de proximité sans fil, typiquement une antenne Bluetooth voire BLE (« Bluetooth Low Energy », c'est-à-dire Bluetooth basse consommation), aptes à communiquer avec des premiers moyens de communication 2 de proximité sans fil d'un autre objet ;
- des deuxièmes moyens de communication 3 longue distance ;
- un dispositif de géolocalisation 4, par satellite ;
- une unité de traitement 5 informatique.

Plus généralement, les objets sont chacun instrumentés (c'est-à-dire qu'ils intègrent chacun un dispositif de géolocalisation). Ainsi, les dispositifs de géolocalisation utilisés peuvent être hétérogènes ou, en d'autres termes de technologies et/ou de fabriquant différents, mais intégrant à minima les éléments fonctionnels de base s'agissant de permettre l'acquisition de données de géolocalisation.

Chaque objet intègre donc une antenne ou, plus généralement, une interface de consommation courte portée de préférence à faible énergie.

Par ailleurs, chaque objet intègre des moyens d'alimentation électriques 7.

La plateforme informatique 6 inclut quant à elle des troisièmes moyens de communication 61 longue distance, aptes à communiquer avec les deuxièmes moyens de communication 3 longue distance des objets.

De plus, pour chaque objet, l'unité de traitement 5 informatique est configurée pour émettre un signal d'activation du dispositif de géolocalisation à intervalles de temps réguliers. En outre, l'unité de traitement informatique est apte à recevoir et mémoriser des données de géolocalisation fournies par le dispositif de géolocalisation 4. L'unité de traitement informatique est également configurée pour attribuer aux données de géolocalisation fournies par le dispositif de géolocalisation un statut de validité positif pendant une durée prédéterminée à compter de la réception des données de géolocalisation. Une fois la durée prédéterminée écoulée, l'unité de traitement informatique change le statut de validité qui devient un statut de validité négatif.

Selon le principe de l'invention, l'unité de traitement 5 informatique de chaque objet est configuré également pour, préalablement à l'émission du signal d'activation :
- ouvrir un canal de communication avec un autre objet par l'intermédiaire des premiers moyens de communication 2 de proximité sans fil ;
- lire le statut de validité de l'autre objet, et,
- si le statut de validité de l'autre objet est positif, recevoir des données de géolocalisation mémorisées dans l'unité de traitement 5 de l'autre objet et maintenir en un état inactif le dispositif de géolocalisation 4 de l'objet en cours d'acquisition de données de géolocalisation,
- émettre, à destination de la plateforme informatique 1, les données de géolocalisation fournies par l'unité de traitement de l'autre objet.

L'unité de traitement 5 informatique de chaque objet est additionnellement configuré pour :
- recevoir, avec les données de géolocalisation mémorisées dans l'unité de traitement de l'autre objet, le statut de validité positif de l'autre objet ;
- recevoir, avec le statut de validité positif de l'autre objet, une durée restante de validité ;
- programmer dans le temps, à la fin de la durée restante de validité, un signal d'activation du dispositif de géolocalisation.

Selon un mode de réalisation particulier, le système de géolocalisation comprend un nombre N d'objets, et la durée restante de validité d'un statut de validité est N fois inférieure à celle d'un intervalle de temps séparant deux signaux d'activation. Ainsi, dans le cas particulier illustré par la figure 1, dans lequel le système comprend deux objets, la durée restante de validité d'un statut de validité est deux fois inférieure à celle d'un intervalle de temps séparant deux signaux d'activation.

La valeur de N est obtenu par l'objet à géolocaliser lors du balayage des objets environnants avec lesquels il peut communiquer.

Tel qu'illustré par la figure 1, les objets sont constitués par des colis intégrant un dispositif embarqué comprenant :
- l'unité de traitement 5 informatique ;
- le code de reconnaissance 1 ;
- les premiers moyens de communication de proximité sans fil ;
- les deuxièmes moyens de communication longue distance ;
- le dispositif de géolocalisation.

Un exemple de fonctionnement d'un système de géolocalisation selon l'invention mettant en œuvre deux objets seulement tel que cela apparaît sur la figure 1, est décrit ci-après.

Si l'on considère les objets A et B (prenant par exemple la forme de colis) contenus dans un camion, une phase de géolocalisation des objets peut se dérouler de la façon suivante.

Selon une première phase, les deux objets A et B sont en veille. Cela signifie que l'unité de traitement 5 de chaque objet autorise seulement le fonctionnement des premiers moyens de communication 2 sans fil, de sorte à émettre le statut des données de géolocalisation mémorisées dans l'unité de traitement. Il est à noter que ces données de géolocalisation peuvent être vides ou périmées.

Pour l'exemple décrit ci-après, nous considérons le statut de validité des données de géolocalisation comme étant à un statut négatif.

Si l'unité de traitement d'un des emballages (en l'occurrence celle de l'emballage A) déclenche une phase d'acquisition de données de géolocalisation, préalablement à l'émission d'un signal d'activation du dispositif de géolocalisation 4 de l'objet A (l'unité de traitement étant, rappelons-le, configurée pour émettre un tel signal d'activation à intervalles de temps réguliers), l'unité de traitement est configurée pour rechercher un autre objet du même type (donc l'objet B selon notre exemple) dans son environnement proche, ceci à l'aide des premiers moyens de communication 2 de proximité sans fil.

L'unité de traitement de l'objet A va alors détecter la présence de l'objet B et va ainsi accéder au statut de validité des données de géolocalisation de l'objet B, ce statut étant négatif selon l'hypothèse de départ.

Dans ce cas, l'unité de traitement de l'objet A n'ayant pas la possibilité de récupérer des données de géolocalisation de l'objet B, l'unité de traitement de l'objet A active le dispositif de géolocalisation 4 de l'objet A. Des données de géolocalisation par satellite sont récupérées par l'intermédiaire du dispositif de géolocalisation, puis mémorisées par l'unité de traitement de l'objet A en attribuant un statut de validité positif auxdites données de géolocalisation. A ce stade, l'objet A est remis en « veille » par son unité de traitement.

Ultérieurement, l'unité de traitement informatique de l'objet B, programmée pour provoquer une mesure de géolocalisation à intervalles de temps réguliers, émet un signal d'activation du dispositif de géolocalisation de l'objet B. Dans cet exemple, il est admis que ce signal d'activation est émis avant la fin du statut de validité positif des données de géolocalisation mémorisées dans l'unité de traitement de l'objet A.

A son tour, l'unité de traitement informatique de l'objet B tente d'ouvrir un canal de communication avec le ou les objets environnants par l'intermédiaire de ses premiers moyens de communication de proximité sans fil. Cette étape conduit l'unité de traitement de l'objet B à détecter l'objet A, dont il va lire le statut de validité positif des données de géolocalisation mémorisées dans l'unité de traitement de l'objet A. Alors, l'objet B, connecté à l'objet A, reçoit les données de géolocalisation de l'objet A, ainsi que la durée restante de validité des données de géolocalisation de l'objet A.

Une fois les données de géolocalisation reçues par l'objet B, l'unité de traitement informatique de l'objet B attribue un statut de validité positif aux données de géolocalisation qu'elle a mémorisées. En outre, l'unité de traitement informatique programme dans le temps l'émission du prochain signal d'activation du dispositif de géolocalisation, ceci à l'échéance de fin de validité des données de géolocalisation.

On note que les durées des statuts de validité positifs sont bien inférieures aux intervalles de temps réguliers avec lesquels les unités de traitement sont configurées pour émettre un signal d'activation des dispositifs de géolocalisation.

Dans ce contexte, l'unité de traitement de l'objet B provoque une recherche de données de géolocalisation à un temps t auquel le statut de validité des données de géolocalisation de l'objet A est négatif.

Ainsi, lorsque l'unité de traitement de l'objet B entre en communication avec l'unité de traitement informatique de l'objet A, aucune donnée de géolocalisation valide n'est détectée dans l'objet A.

Il en résulte que l'unité de traitement de l'objet B émet un signal d'activation du dispositif de géolocalisation de l'objet B, qui entre en communication avec un satellite pour acquérir des données de géolocalisation qui sont mémorisées dans l'unité de traitement informatique de l'objet B en leur attribuant un statut de validité positif.

Ultérieurement, c'est au tour de l'unité de traitement informatique de l'objet A de déclencher une recherche de données de géolocalisation. L'unité de traitement informatique de l'objet A va alors procéder selon les étapes déjà décrites en référence à l'unité de traitement informatique de l'emballage B.

Bien entendu, les données de géolocalisation des objets peuvent être transmises à la plateforme informatique 6, ceci à tout moment, soit de façon provoquée de façon périodique par les unités de traitement informatique des objets, soit sur requête de la plateforme informatique à destination des unités de traitement informatique des objets.

## Revendications

1. Système de géolocalisation comprenant :
- au moins deux objets (A, B) à géolocaliser, chaque objet intégrant :
- un code de reconnaissance informatique (1) ;
- des premiers moyens de communication (2) de proximité sans fil, aptes à communiquer avec des premiers moyens de communication de proximité sans fil d'un autre objet ;
- des deuxièmes moyens de communication longue distance ;
- un dispositif de géolocalisation (4) ;
- une unité de traitement configurée pour émettre un signal d'activation du dispositif de géolocalisation à intervalles de temps réguliers et apte à recevoir et mémoriser des données de géolocalisation fournies par le dispositif de géolocalisation, et configurée pour leur attribuer un statut de validité positif pendant une durée prédéterminée, et un statut de validité négatif au-delà de la durée prédéterminée
- une plateforme informatique (6) incluant au moins une base de données listant les codes de reconnaissance informatiques de tous les objets et incluant des troisièmes moyens de communication longue distance aptes à communiquer avec les deuxièmes moyens de communication longue distance des objets,
le système étant tel que l'unité de traitement d'un objet est configurée pour, préalablement à une émission du signal d'activation :
- ouvrir un canal de communication avec un autre objet par l'intermédiaire des premiers moyens de communication de proximité sans fil
- lire le statut de validité de l'autre objet, et,
- si le statut de validité de l'autre objet est positif, recevoir des données de géolocalisation mémorisées dans l'unité de traitement de l'autre objet et maintenir en un état inactif le dispositif de géolocalisation,
- émettre, à destination de la plateforme informatique, les données de géolocalisation fournies par l'unité de traitement de l'autre objet.

2. Système de géolocalisation selon la revendication 1, **caractérisé en ce que** l'unité de traitement (5) d'un objet est configurée pour recevoir, avec les données de géolocalisation mémorisées dans l'unité de traitement de l'autre objet, le statut de validité positif de l'autre objet.

3. Système de géolocalisation selon la revendication 2, **caractérisé en ce que** l'unité de traitement (5) d'un objet est configurée pour recevoir, avec le statut de validité positif de l'autre objet, une durée restante de validité.

4. Système de géolocalisation selon la revendication 3, **caractérisé en ce que** l'unité de traitement (5) d'un objet est configurée pour programmer dans le temps, à la fin de la durée restante de validité, un signal d'activation du dispositif de géolocalisation.

5. Système de géolocalisation selon l'une des revendications 3 et 4, **caractérisé en ce que** la durée restante de validité d'un statut de validité est au moins deux fois inférieure à celle d'un intervalle de temps séparant deux signaux d'activation.

6. Système de géolocalisation selon la revendication 5, **caractérisé en ce qu'**il comprend un nombre N d'objets (A, B) et **en ce que** la durée restante de validité d'un statut de validité est N fois inférieure à celle d'un intervalle de temps séparant deux signaux d'activation.

7. Système de géolocalisation selon l'une quelconque des revendications 1 à 6, **caractérisé en ce que** l'unité de traitement (5) d'un objet est configurée pour, consécutivement à une émission du signal d'activation, émettre, à destination de la plateforme informatique, les données de géolocalisation fournies par le dispositif de géolocalisation et le code de reconnaissance informatique de l'objet.

8. Système de géolocalisation selon la revendication 7, **caractérisé en ce que** l'unité de traitement d'un objet est configurée pour recevoir, avec les données de géolocalisation mémorisées dans l'unité de traitement de l'autre objet, le code de reconnaissance informatique de l'autre objet.

9. Système de géolocalisation selon l'une quelconque des revendications précédentes, **caractérisé en ce que** les objets sont chacun constitués par des colis intégrant un dispositif embarqué comprenant :
- l'unité de traitement ;
- le code de reconnaissance (1) ;
- les premiers moyens de communication de proximité sans fil ;
- les deuxièmes moyens de communication longue distance ;
- le dispositif de géolocalisation.

## Patentansprüche

1. Geolokalisierungssystem, umfassend:
- mindestens zwei zu geolokalisierende Objekte (A, B), wobei jedes Objekt enthält:
- einen IT-Kenncode (1);
- erste drahtlose Nahbereichskommunikationsmittel (2), die imstande sind, mit ersten drahtlosen Nahbereichskommunikationsmitteln eines anderen Objekts zu kommunizieren;
- zweite Fernkommunikationsmittel;
- eine Geolokalisierungsvorrichtung (4);
- eine Verarbeitungseinheit, die ausgelegt ist, um in regelmäßigen Zeitabständen ein Aktivierungssignal der Geolokalisierungsvorrichtung zu senden, und imstande ist, Geolokalisierungsdaten zu empfangen und zu speichern, die vom Geolokalisierungsvorrichtung bereitgestellt werden, und ausgelegt ist, um ihnen für eine vorgegebene Dauer einen positiven Gültigkeitsstatus und über die vorgegebene Dauer hinaus einen negativen Gültigkeitsstatus zuzuweisen;
- eine IT-Plattform (6), die mindestens eine Datenbank einschließt, die die IT-Kenncodes aller Objekte auflistet und dritte Fernkommunikationsmittel enthält, die imstande sind, mit den zweiten Fernkommunikationsmitteln der Objekte zu kommunizieren,
wobei das System derart ist, dass die Verarbeitungseinheit eines Objekts ausgelegt ist, um vor dem Senden des Aktivierungssignals:
- einen Kommunikationskanal mit einem anderen Objekt über die ersten drahtlosen Nahkommunikationsmittel zu öffnen,
- den Gültigkeitsstatus des anderen Objekts zu lesen, und
- wenn der Gültigkeitsstatus des anderen Objekts positiv ist, in der Verarbeitungseinheit des anderen Objekts gespeicherte Geolokalisierungsdaten zu empfangen und die Geolokalisierungsvorrichtung in einem inaktiven Zustand zu halten,
- an die IT-Plattform die von der Verarbeitungseinheit des anderen Objekts gelieferten Geolokalisierungsdaten zu senden.

2. Geolokalisierungssystem nach Anspruch 1, **dadurch gekennzeichnet, dass** die Verarbeitungseinheit (5) eines Objekts ausgelegt ist, um zusammen mit den in der Verarbeitungseinheit des anderen Objekts gespeicherten Geolokalisierungsdaten den positiven Gültigkeitsstatus des anderen Objekts zu empfangen.

3. Geolokalisierungssystem nach Anspruch 2, **dadurch gekennzeichnet, dass** die Verarbeitungseinheit (5) eines Objekts ausgelegt ist, um zusammen mit dem positiven Gültigkeitsstatus des anderen Objekts eine verbleibende Gültigkeitsdauer zu empfangen.

4. Geolokalisierungssystem nach Anspruch 3, **dadurch gekennzeichnet, dass** die Verarbeitungseinheit (5) eines Objekts ausgelegt ist, um am Ende der verbleibenden Gültigkeitsdauer ein Aktivierungssignal der Geolokalisierungsvorrichtung zeitlich zu programmieren.

5. Geolokalisierungssystem nach einem der Ansprüche 3 und 4, **dadurch gekennzeichnet, dass** die verbleibende Gültigkeitsdauer eines Gültigkeitsstatus mindestens zweimal kürzer ist als die eines Zeitintervalls zwischen zwei Aktivierungssignalen.

6. Geolokalisierungssystem nach Anspruch 5, **dadurch gekennzeichnet, dass** es eine Anzahl N von Objekten (A, B) umfasst und dass die verbleibende Gültigkeitsdauer eines Gültigkeitsstatus N-mal kürzer ist als die eines Zeitintervalls zwischen zwei Aktivierungssignalen.

7. Geolokalisierungssystem nach einem der Ansprüche 1 bis 6, **dadurch gekennzeichnet, dass** die Verarbeitungseinheit (5) eines Objekts ausgelegt ist, um nach einer Sendung des Aktivierungssignals die von der Geolokalisierungsvorrichtung gelieferten Geolokalisierungsdaten und den IT-Kenncode des Objekts an die IT-Plattform zu senden.

8. Geolokalisierungssystem nach Anspruch 7, **dadurch gekennzeichnet, dass** die Verarbeitungseinheit eines Objekts ausgelegt ist, um zusammen mit den in der Verarbeitungseinheit des anderen Objekts gespeicherten Geolokalisierungsdaten den IT-Kenncode des anderen Objekts zu empfangen.

9. Geolokalisierungssystem nach einem der vorhergehenden Ansprüche, **dadurch gekennzeichnet, dass** die Objekte jeweils aus Paketen bestehen, die eine eingebettete Vorrichtung enthalten, umfassend:
- die Verarbeitungseinheit;
- den Kenncode (1);
- die ersten drahtlosen Nahbereichskommunikationsmittel;
- die zweiten Fernkommunikationsmittel;
- die Geolokalisierungsvorrichtung.

## Claims

1. A geolocation system comprising:
- at least two items (A, B) to be geolocated, each item including:
- a computer recognition code (1):
- first wireless proximity communication means (2), able to communicate with first wireless proximity communication means of another item:
- second long-range communication means:
- a geolocation device (4);
- a processing unit configured to transmit an activation signal of the geolocation device at regular time intervals and able to receive and store geolocation data supplied by the geolocation device, and configured to assign them a positive validity status during a predetermined time period, and a negative validity status beyond the predetermined time period,
- a computer platform (6) including at least one database listing the computer recognition codes of all the items and including third long-range communication means able to communicate with the second long-range communication means of the items,
the system being such that the processing unit of one item is configured to, prior to the transmission of the activation signal:
- open a channel of communication with another item by way of the wireless proximity communication means,
- read the validity status of the other item, and,
- if the validity status of the other item is positive, receive geolocation data stored in the processing unit of the other item and maintain the geolocation device in an inactive state,
- transmit to the computer platform the geolocation data supplied by the processing unit of the other item.

2. The geolocation system according to claim 1, **characterized in that** the processing unit (5) of one item is configured to receive, with the geolocation data stored in the processing unit of the other item, the positive validity status of the other item.

3. The geolocation system according to claim 2, **characterized in that** the processing unit (5) of one item is configured to receive, with the positive validity status of the other item, a remaining validity time period.

4. The geolocation system according to claim 3, **characterized in that** the processing unit (5) of one item is configured to program in time, at the end of the remaining validity time period, an activation signal of the geolocation device.

5. The geolocation system according any of claims 3 and 4, **characterized in that** the remaining validity time period of a validity status is at least two times less than that of a time interval separating two activation signals.

6. The geolocation system according to claim 5, **characterized in that** it comprises a number N of items (A, B), and **in that** the remaining validity time period of a validity status is N times less than that of a time interval separating two activation signals.

7. The geolocation system according to any one of claims 1 to 6, **characterized in that** the processing unit (5) of one item, following a transmission of the activation signal, is configured to transmit the geolocation data supplied by the geolocation device and the computer recognition code of the item to the computer platform.

8. The geolocation system according to claim 7, **characterized in that** the processing unit of one item is configured to receive, with the geolocation data stored in the processing unit of the other item, the computer recognition code of the other item.

9. The geolocation system according to any one of the preceding claims, **characterized in that** the items consist of packages, each containing a built-in device comprising:
- the processing unit:
- the recognition code (1):
- the first wireless proximity communication means:
- the second long-range communication means:
- the geolocation device.
